# EUROPÄISCHE PATENTSCHRIFT

(11) **EP 0 691 169 B1**
(45) Veröffentlichungstag und Bekanntmachung des Hinweises auf die Patenterteilung: **10.09.1997**
(21) Anmeldenummer: 95107641.3
(22) Anmeldetag: 19.05.1995
(51) Int. Cl.: B23B 31/08, B23Q 1/00

(54) **Schnellwechselfutter mit Längenausgleichsvorrichtung und achs-zentraler Kühlmittelzuführung**
Quick-change tool holder with length correcting device and axial cooling fluid duct
Porte-outil à changement rapide avec disposition de correction de la longueur et amené axiale de fluide de refroidissement

(30) Priorität: 05.07.1994 DE 4423432
(43) Veröffentlichungstag der Anmeldung: 10.01.1996
(73) Patentinhaber: Emuge-Werk Richard Glimpel, Fabrik für Präzisionswerkzeuge, vormals Moschkau & Glimpel, D-91207 Lauf (DE)
(72) Erfinder:
(74) Vertreter: Matschkur, Götz, Lindner Patent- und Rechtsanwälte

(56) Entgegenhaltungen:
- EP-A- 0 434 023
- DE-C- 4 019 760

## Beschreibung

Die Erfindung bezieht sich auf ein Schnellwechselfutter mit einem achs-zentralen Kühlmittelkanal und einer Längenausgleichsvorrichtung, bei der der Futterkörper gegen einen Federausgleich in den Futterschaft verschiebbar und gegen die Wirkung einer Rückholfeder gegenüber dem Futterschaft ausziehbar ist, wobei der Kühlmittelkanal ein mit dem Futterkörper fest verbundenes, am inneren Ende verschlossenes Kühlmittelrohr enthält, das im Futterschaft gleitend verschiebbar gelagert ist und zwischen zwei beabstandeten Gleitdichtungen mit einer seitlichen Kühlmitteleintrittsöffnung versehen ist und die Gleitdichtungen z.B. O-Ringe sind, die an beiden Enden einer das Kühlmittelrohr mit Spiel umgebenden Bohrung einer mit dem Futterschaft verbundenen Kühlmittelzuführungsbuchse angeordnet sind.

Bei zum Gewindeschneiden verwendbaren Schnellwechselfuttern ergibt sich die Schwierigkeit, daß sich durch die Längenausgleichsvorrichtung eine Volumenänderung des Kühlmittel-Hydraulikraums ergibt. Ist die Längenausgleichsvorrichtung ausgezogen und liegt somit ein erhöhtes inneres Volumen für das Kühlmittel vor, so genügt häufig die Kraft der Rückholfeder nicht mehr, das ausgezogene Teil gegen den Druck der Kühlflüssigkeit im Hydraulikraum zurückzuholen, so daß es beim Weitertakten zur nächsten Bearbeitungsstation Bruch gibt, da das Werkzeug ja weiter vorsteht, als es für die Taktbewegung vorgesehen ist. Zur Vermeidung einer solchen Volumenänderung ist in der DE 40 19 760 C2 bereits ein Schnellwechselfutter der eingangs genannten Art vorgeschlagen worden, welches bei einfachem störunanfälligem Aufbau selbst bei hohen Drücken die Gefahr eines Hängenbleibens des Futterkörpers aufgrund des Kühlmitteldruckeinflusses sicher vermeidet.

Der vorliegenden Erfindung liegt die Aufgabe zugrunde, dieses bekannte Schnellwechselfutter dahingehend zu verbessern, daß die Baulänge bei gleicher Auszugslänge der Längenausgleichsvorrichtung kürzer ist.

Zur Lösung dieser Aufgabe ist erfindungsgemäß vorgesehen, daß in der Bohrung eine das Kühlmittelrohr umgebende Schiebehülse vorgesehen ist, die über innere und äußere beabstandete Gleitdichtungen sowohl in der Bohrung als auch auf dem mit einem Mitnehmer für die Schiebehülse versehenen Kühlmittelrohr verschiebbar ist, derart, daß die Kühlmitteleintrittsöffnung stets zwischen den inneren und eine Kühlmittelzuführöffnung zur Bohrung stets zwischen den äußeren Gleitdichtungen liegt und daß die Hülse zwischen den Gleitdichtungen wenigstens eine Queröffnung aufweist.

Durch die erfindungsgemäße Ausbildung muß die Gesamtlänge der Bohrung zwischen den Gleitdichtungen nicht mehr der Auszugslänge entsprechen, sondern es genügt im wesentlichen die halbe Auszugslänge, da ja durch die Schiebehülse mit den durch sie gebildeten inneren und äußeren Verteilräumen die Länge dieser Verteilräume sich addieren kann.

In Ausgestaltung der Erfindung kann dabei vorgesehen sein, daß die Bohrung am inneren Ende mit einer Anschlagschulter für die Schiebehülse versehen ist, während das Kühlmittelrohr bevorzugt stromabwärts der Kühlmitteleintrittsöffnung mit einer Anschlagschulter für die Schiebehülse versehen ist, wobei die letztere nach einem Ausziehen des Kühlmittelrohrs und der Schiebehülse diese wieder beim Rückziehen in die Ausgangsstellung zurücknimmt.

Schließlich liegt es auch noch im Rahmen der Erfindung, zur Abdichtung des Einsatzes vorzusehen, daß am Boden einer Einsatzhülse des Futterkörpers ein Dichtring mit einer umlaufenden, sich an den Schaft des Einsatzes anlegenden Dichtlippe angeordnet ist.

Die Erfindung soll nachstehend an einem Ausführungsbeispiel sowie anhand der Zeichnung näher erläutert werden. Dabei zeigen:
- Fig. 1: einen Schnitt durch ein erfindungsgemäßes Schnellwechselfutter, und
- Fig. 2: einen vergrößerten Schnitt entsprechend dem strichpunktierten Ausschnitt in Fig. 1.

Das gezeigte Schnellwechselfutter umfaßt einen Futterschaft 1 und einen axial gegenüber diesem verschiebbar gelagerten Futterkörper 2 mit der vorderen Einsatzhülse 3 für den nicht gezeigten Schaft des Einsatzes, in welchem dann wiederum beispielsweise ein Bohrer oder Gewindeschneidbohrer lösbar gehaltert ist. Der Einsatz selbst weist wiederum bevorzugt eine Überlastkupplung auf, die bei einem Sich-Verkeilen des Bohrers od.dgl. anspricht und verhindert, daß das ganze Werkzeug zu Bruch geht. Die zur Schaffung eines axialen Längenausgleichs dienende axiale Verschiebbarkeit des Futterkörpers gegenüber dem Futterschaft ermöglicht einen selbsttätigen Ausgleich zwischen dem Vorschub des Werkzeugs und der Gewindesteigung des Gewindeschneidbohrers. Die Drehmomentübertragung zwischen dem Futterschaft 1 und dem Futterkörper 2 bewirken dabei in üblicher Weise Kugeln 5, die in Längsnuten 6 und 7 der beiden gegeneinander verschiebbaren Futterteile 1 und 2 eingreifen.

Im dargestellten Ausführungsbeispiel ist der Futterschaft mit einer zentralen hinteren Kühlmittelzuführung 9 versehen. Der innere achszentrale Kühlmittelkanal umfaßt ein Kühlmittelrohr 10, welches fest mit dem Futterkörper 2 verbunden ist und im Futterschaft 1 axial verschiebbar ist. Dabei verschiebt sich das hintere Ende des mit einem Boden 11 abgeschlossenen Kühlmittelrohrs 10 mehr oder weniger weit in die Bohrung 12. Innerhalb des Futterschafts 1 mit den seitlichen Kühlmittelzuführbohrungen 13 und 14 verläuft das Kühlmittelrohr 10 mit Spiel in einer Bohrung 15, in der erfindungsgemäß eine Schiebehülse 16 angeordnet ist, die beidends durch vorzugsweise als O-Ringe ausgebildete innere Gleitdichtungen 17, 18 auf dem Kühlmittelrohr 10 dichtend verschiebbar ist und außenseitig durch entsprechend beabstandete Gleitdichtungen 19, 20 in der Bohrung 15 abgedichtet ist. Zwischen den Gleitdichtungen 17, 18 bw. 19, 20 ist die Schiebehülse verschmälert ausgebildet, so daß eine innerere ringförmige Verteilkammer 21 und eine äußere ringförmige Verteilkammer 22 gebildet werden, wobei in den inneren die Kühlmitteleintrittsöffnung 23 des Kühlrohrs einmündet, während die äußere Verteilkammer 22 mit der Kühlmittelzuführöffnung 14 zur Bohrung 15 kommuniziert. Das Kühlmittelrohr 10 ist am hinteren Ende mit einem Mitnehmerring 24 versehen, der bei einem entsprechend weiten Ausziehen an dem üblicherweise an einer Anschlagschulter 25 der Bohrung 15 anliegenden hinteren Ende 26 der Schiebehülse anstößt und diese dabei mitnimmt. Dadurch vermeidet man, daß der Futterschaft 1 im Bereich der Kühlmittelzufuhr zum Kühlmittelrohr 10 so lang ausgebildet sein muß wie die Auszugslänge der Längenausgleichsvorrichtung, da sich diese Auszugslänge auf die Längen der beiden Verteilkammen 21 und 22 verteilen kann. Bei 16' erkennt Queröffnungen der Schiebehülse 16 zur Verbindung der inneren und äußeren Verteilkammern 21, 22.

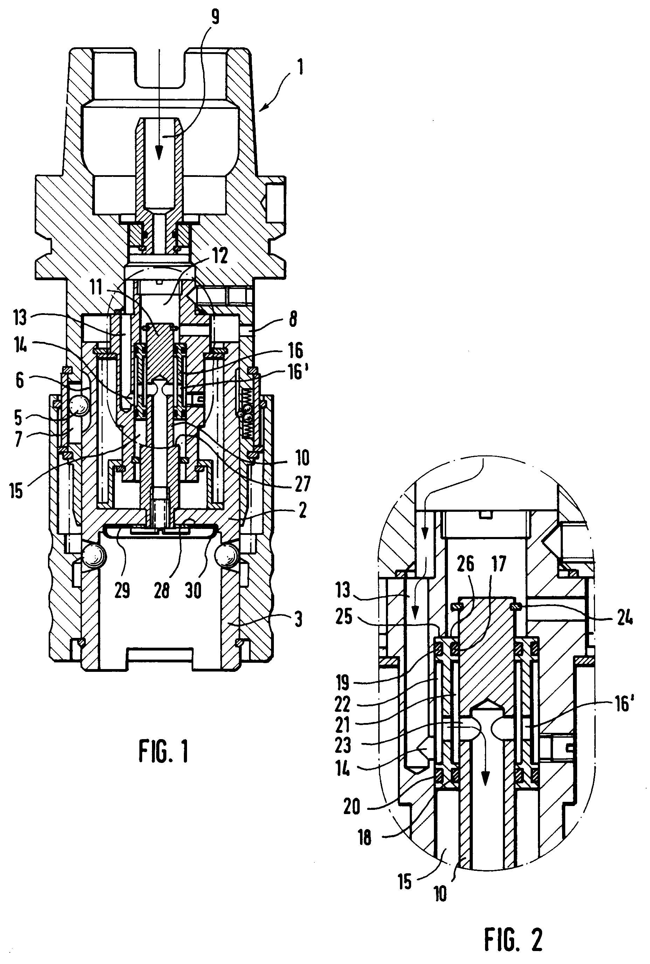

Bei einem vollständigen Ausziehen der Schiebehülse, bei der dann die Kühlmittelzuführöffnung 14 im Bereich des hinteren Endes der nach vorne verschobenen Schiebehülse, jedoch selbstverständlich noch innerhalb der Verteilkammer 22, liegt, kann die Schiebehülse entweder durch Gleitreibung von dem nach innen zurückbewegten Kühlmittelrohr 10 oder aber durch Anstoßen an einer Anschlagschulter 27 wieder in die in Fig. 1 und 2 gezeigte Ausgangsstellung zurückgeführt werden. In Fig. 1 erkennt man darüber hinaus, daß am Boden 28 der Einsatzhülse 3 des Futterkörpers 2 ein Dichtring 29 mit einer umlaufenden, sich an den Schaft des Einsatzes anlegenden Dichtlippe 30 angeordnet ist, der eine besonders einfache Abdichtung des Einsatzes gewährleistet.

## Patentansprüche

1. Schnellwechselfutter mit einem achs-zentralen Kühlmittelkanal und einer Längenausgleichsvorrichtung, bei der der Futterkörper (2) gegen einen Federausgleich in den Futterschaft (1) verschiebbar und gegen die Wirkung einer Rückholfeder gegenüber dem Futterschaft (1) ausziehbar ist, wobei der Kühlmittelkanal ein mit dem Futterkörper (2) fest verbundenes, am inneren Ende verschlossenes Kühlmittelrohr (10) enthält, das im Futterschaft (1) gleitend verschiebbar gelagert ist und zwischen zwei beabstandeten Gleitdichtungen (19, 20) mit einer seitlichen Kühlmitteleintrittsöffnung (23) versehen ist und die Gleitdichtungen (19, 20) z.B. O-Ringe sind, die an beiden Enden einer das Kühlmittelrohr (10) mit Spiel umgebenden Bohrung (15) einer mit dem Futterschaft (1) verbundenen Kühlmittelzuführungsbuchse angeordnet sind, dadurch gekennzeichnet, daß in der Bohrung (15) eine das Kühlmittelrohr umgebende Schiebehülse (16) vorgesehen ist, die unter Bildung innerer und äußerer Verteilkammern (21, 22) über innere und äußere beabstandete Gleitdichtungen (17, 18) sowohl in der Bohrung (15) als auch auf dem mit einem Mitnehmer (24) für die Schiebehülse (16) versehenen Kühlmittelrohr (10) verschiebbar ist, derart, daß die Kühlmitteleintrittsöffnung (23) stets zwischen den inneren Gleitdichtungen (17) und eine Kühlmittelzuführöffnung (14) zur Bohrung (15) stets zwischen den äußeren Gleitdichtungen (18) liegt und daß die Schiebehülse (16) zwischen den Gleitdichtungen (17, 18) wenigstens eine Queröffnung (16') aufweist.

2. Schnellwechselfutter nach Anspruch 1, dadurch gekennzeichnet, daß die Bohrung (15) am inneren Ende mit einer Anschlagschulter (25) für die Schiebehülse (16) versehen ist.

3. Schnellwechselfutter nach Anspruch 1 oder 2, dadurch gekennzeichnet, daß das Kühlmittelrohr (10) stromabwärts der Kühlmitteleintrittsöffnung (23) mit einer Anschlagschulter (27) für die Schiebehülse (16) versehen ist.

4. Schnellwechselfutter nach einem der Ansprüche 1 bis 3, dadurch gekennzeichnet, daß am Boden (28) einer Einsatzhülse (3) des Futterkörpers (2) ein Dichtring (29) mit einer umlaufenden, sich an den Schaft eines Einsatzes anglegenden Dichtlippe (30) angeordnet ist.

## Claims

1. A quick-change chuck with an axially central cooling medium duct and a length compensating device, in which the chuck body (2) is displaceable against spring compensation in the chuck shaft (1) and can be withdrawn relative to the chuck shaft (1) against the effect of a restoring spring, the cooling medium duct comprising a cooling medium pipe (10), which is fixedly connected to the chuck body (2), is sealed at its inner end, is mounted so as to slide in the chuck shaft (1) and is provided between two spaced-apart sliding sealing elements (19, 20) with a lateral cooling medium inlet aperture (23), and the sliding sealing elements (19, 20) are O-rings, for example, which are arranged at either end of a bore (15), enclosing the cooling medium pipe (10) with clearance, of a cooling medium supply bush connected to the chuck shaft (1), characterised in that a slide sleeve (16) enclosing the cooling medium pipe is provided in the bore (15), which slide sleeve is displaceable via inner and outer spaced-apart sliding sealing elements (17, 18) both within the bore (15) and on the cooling medium pipe (10) provided with a driver (24) for the slide sleeve (16) to form inner and outer distribution chambers (21, 22), so that the cooling medium inlet aperture (23) lies at all times between the inner sliding sealing elements (17) and a cooling medium supply aperture (14) leading to the bore (15) lies at all times between the outer sliding sealing elements (18), and the slide sleeve (16) comprises a least one transverse opening (16') between the sliding sealing elements (17, 18).

2. A quick-change chuck according to claim 1, characterised in that the bore (15) is provided at its inner end with an abutment shoulder (25) for the slide sleeve (16).

3. A quick-change chuck according to claim 1 or 2, characterised in that the cooling medium pipe (10) is provided downstream of the cooling medium inlet aperture (23) with an abutment shoulder (27) for the slide sleeve (16).

4. A quick-change chuck according to one of claims 1 to 3, characterised in that a sealing ring (29) with a circumferential sealing lip (30) resting against the shaft of an insert is arranged at the base (28) of an insert sleeve (3) of the chuck body (2).

## Revendications

1. Porte-outils à changement rapide comprenant un canal central axial de fluide de refroidissement et un dispositif de compensation de longueur, par lequel le corps de porte-outils (2) peut être déplacé en translation dans la queue de porte-outils (1) à l'encontre d'un système de compensation à ressort et peut être extrait par rapport à la queue de porte-outils (1) à l'encontre de l'action d'un ressort de rappel, le canal de fluide de refroidissement comprenant un tube de fluide de refroidissement (10) relié rigidement au corps de porte-outils (2) et fermé à l'extrémité intérieure, tube qui est monté déplaçable en translation par glissement dans la queue de porte-outils (1), et est pourvu d'une ouverture d'entrée de fluide de refroidissement latérale (23) entre deux joints d'étanchéité à glissement (19, 20) espacés l'un de l'autre, les joints d'étanchéité à glissement (19, 20) étant, par exemple, des joints toriques, qui sont disposés aux deux extrémités d'un alésage (15), entourant avec jeu le tube de fluide de refroidissement (10), d'un manchon d'amenée de fluide de refroidissement relié à la queue de porte-outils (1), caractérisé en ce que, dans l'alésage (15), est prévue une douille coulissante (16) entourant le tube de fluide de refroidissement, et qui, en formant des chambres de distribution intérieure et extérieure (21, 22) par l'intermédiaire de joints d'étanchéité à glissement intérieurs et extérieurs (17, 18) espacés les uns des autres, peut coulisser aussi bien dans l'alésage (15) que sur le tube de fluide de refroidissement (10) pourvu d'un entraîneur (24) pour la douille coulissante (16), d'une façon telle, que l'ouverture d'entrée de fluide de refroidissement (23) soit toujours située entre les joints d'étanchéité à glissement intérieurs (17) et qu'une ouverture (14) d'amenée de fluide de refroidissement à l'alésage (15) soit toujours située entre les joints d'étanchéité à glissement extérieurs (18), et en ce que la douille coulissante (16) comporte entre les joints d'étanchéité à glissement (17, 18), au moins une ouverture transversale (16').

2. Porte-outils à changement rapide selon la revendication 1, caractérisé en ce que l'alésage (15) est pourvu, à l'extrémité intérieure, d'un épaulement de butée (25) pour la douille coulissante (16).

3. Porte-outils à changement rapide selon la revendication 1 ou 2, caractérisé en ce que le tube de fluide de refroidissement (10) est pourvu, en aval de l'ouverture d'entrée de fluide de refroidissement (23), d'un épaulement de butée (27) pour la douille coulissante (16).

4. Porte-outils à changement rapide selon l'une des revendications 1 à 3, caractérisé en ce que sur le fond (28) d'une douille d'insert (3) du corps de porte-outils (2), est disposé un anneau d'étanchéité (29) comportant une lèvre d'étanchéité périphérique (30) s'appliquant contre la queue d'un insert.
